# EUROPEAN PATENT SPECIFICATION

(11) **EP 2 445 653 B1**
(45) Date of publication and mention of the grant of the patent: **06.01.2016**
(21) Application number: 10727730.3
(22) Date of filing: 24.06.2010
(51) Int. Cl.: B05D 1/36, B05D 7/00, C09D 4/00

(54) **PAINT COATING SYSTEM AND METHOD OF PRODUCING MULTILAYERED PAINT COATING**
ANSTRICHSYSTEM UND VERFAHREN ZUR HERSTELLUNG MEHRSCHICHTIGER ANSTRICHE
SYSTÈME DE REVÊTEMENT DE PEINTURE ET PROCÉDÉ DE PRODUCTION DE REVÊTEMENT DE PEINTURE MULTICOUCHE

(30) Priority: 26.06.2009 US 220932 P
(43) Date of publication of application: 02.05.2012
(73) Proprietor: BASF SE, 67056 Ludwigshafen (DE)
(72) Inventor: OHRBOM, Walter H., Hartland Township MI 48353 (US); MENOVCIK, Gregory G., Northville MI 48167 (US); MORMILE, Patrick J., Birmingham MI 48009 (US); CAMPBELL, Donald H., Hartland MI 48353 (US); CRANFILL, David, Brighton Michigan 48116 (US)
(86) International application number: PCT/EP2010/059009
(87) International publication number: WO 2010/149746

(56) References cited:
- WO-A1-2008/085234

## Description

### FIELD OF THE INVENTION

The invention generally relates to a paint coating system and, more particularly, a paint coating system which includes an organoborane complex and a method of forming a multilayered paint coating.

### DESCRIPTION OF THE RELATED ART

Paint coatings are well known in the art and are generally formed from coating compositions which are applied and cured on substrates in many different industries. The paint coatings are utilized to impart the substrates with improved physical properties, such as ultraviolet resistance, corrosion resistance, and weather resistance and to impart the substrates with a color or a gloss for aesthetic purposes. One industry that employs paint coatings for all of the above mentioned reasons is the automotive coating industry.

Many different methods of curing the coating compositions to form the paint coatings have been utilized. For example, an interest in using quick cure technology, such as UV-cure and electron beam technology, has arisen in the automotive coating industry. These technologies utilize free electrons, whether as radicals formed by UV light or as electrons formed from electron beams, to polymerize and cure the coating compositions. These technologies minimize the curing times of the coating compositions as compared to differently cured solvent-based and water-based coatings but require expensive equipment such as UV lamps, vacuums, filaments, etc. Thus, use of these technologies is expensive, time consuming, and labor intensive.

One attempt to improve coating compositions is to utilize organoborane complexes in the coating compositions. Organoboranes are known to readily react with oxygen from ambient air to form free radicals, which then polymerize organic monomers to form the paint coatings. To prevent the organoboranes from readily reacting with oxygen, the organoboranes are typically complexed with an amine, thereby forming the organoborane complexes, which are generally stable in the presence of oxygen and ambient air. Thus, to form the paint coatings, the coating compositions, including the organoborane complexes, are applied on substrates. Then, a decomplexing agent is applied on the coating composition to decomplex the organoborane complexes. When decomplexed, the organoborane forms free radicals and polymerizes the organic monomers to form the paint coatings. To prevent the decomplexing agent from prematurely decomplexing the organoborane complex, a two-component system, where the organoborane complex and the decomplexing agent are separate, is required. The two-component system introduces additional costs due to the additional steps and labor required to form the paint coatings, and is thus undesirable. In addition, heat may be utilized to initiate and/or accelerate decomplexing of the organoborane complexes. When heat is utilized, the heat is provided by ovens, which are expensive, large and require a great deal of energy, further contributing to expenses in forming the paint coatings.

In view of the foregoing, there remains an opportunity to provide an improved paint coating system. It would be further advantageous to provide an improved method of forming a multilayered paint coating which does not require ovens to form the multilayered paint coating and which minimizes the steps required to form the multilayered paint coating.

WO2008/085234 discloses a process for forming a cured coating on a surface with a saytem comprising (i) a free radical polymerisable monomer, oligomer or polymer, (ii) an organoborane amine complex, (iii) an amine reactive compound, and (iv) oxygen. in which the components (i)-(iv) are distributed between a base and curing agent such that one of the ingredients (ii) or (iii) is in the base and the other in the curing agent and the base and the curing agent are not combined in present of oxygen before the curing step.

### SUMMARY OF THE INVENTION

The present invention provides a paint coating system. The paint coating system comprises a substrate and a first paint layer disposed on the substrate. The first paint layer is formed from a first composition comprising either a first decomplexing agent or a first organoborane complex. The paint coating system further comprises a second paint layer disposed on the first paint layer. The second paint layer is formed from a second composition comprising the other of the first decomplexing agent and the first organoborane complex. At least one of the first and second compositions further comprises a radical polymerizable compound selected from the group of free radical polymerizable monomers, free radical polymerizable oligomers, free radical polymerizable polymers, and combinations thereof. The first decomplexing agent decomplexes the first organoborane complex at an interface of the first and second paint layers to form free radicals which initiate free radical polymerization of the radical polymerizable compound.

The present invention also provides a method for producing a multilayered paint coating. The method comprises the step of providing the substrate. The method further comprises the step of applying the first paint layer on the substrate. The method further comprises the step of applying the second paint layer on the first paint layer. The method also comprises the step of curing at least one of the first and second paint layers, thereby producing the multilayered paint coating.

The method of the present invention produces a multilayered paint coating having excellent physical properties. In addition, the step of curing at least one of the first and second paint layers may be performed at ambient conditions, i.e., in the absence of an external heating source. Because the step of curing at least one of the first and second paint layers may be performed in the absence of the external heating source, ovens are not required for the method of the present invention, which drastically reduces costs associated with methods of producing multilayered paint coatings. In addition, the first composition and the second composition of the paint coating system can each be one component compositions. Stated differently, the paint coating system does not require separate and discrete curing agents in addition to the first and second paint layers, thereby further reducing costs and production times associated with paint coating systems. This is attributable to the fact the first decomplexing agent and the first organoborane complex are typically in separate layers, and the first decomplexing agent decomplexes the first organoborane complex at an interface of the first and second paint layers to form free radicals which initiate free radical polymerization of the radical polymerizable compound.

### BRIEF DESCRIPTION OF THE DRAWINGS

Other advantages of the present invention will be readily appreciated as the same becomes better understood by reference to the following detailed description when considered in connection with the accompanying drawings wherein:

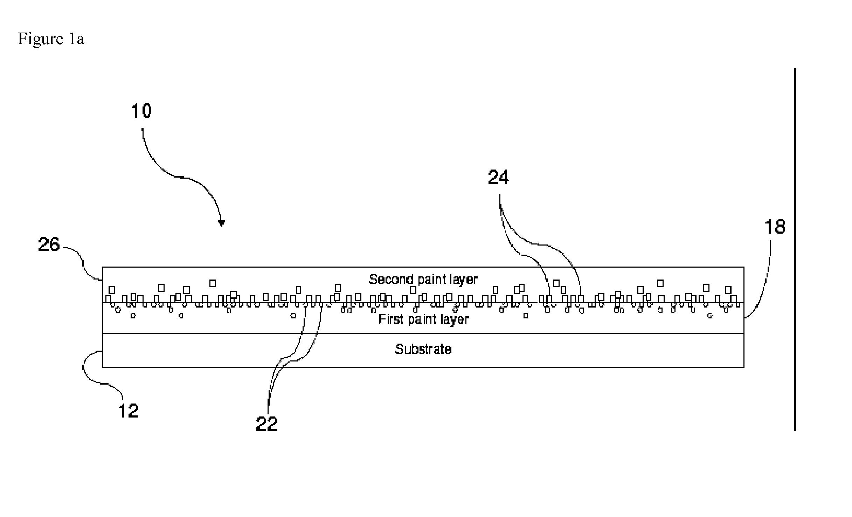

Figure 1a is a schematic cross-section view of a substrate having a first paint layer disposed thereon and a second paint layer disposed on the first paint layer, wherein a first decomplexing agent in the first paint layer and a first organoborane complex in the second paint layer are located at an interface of the first and second paint layers; and

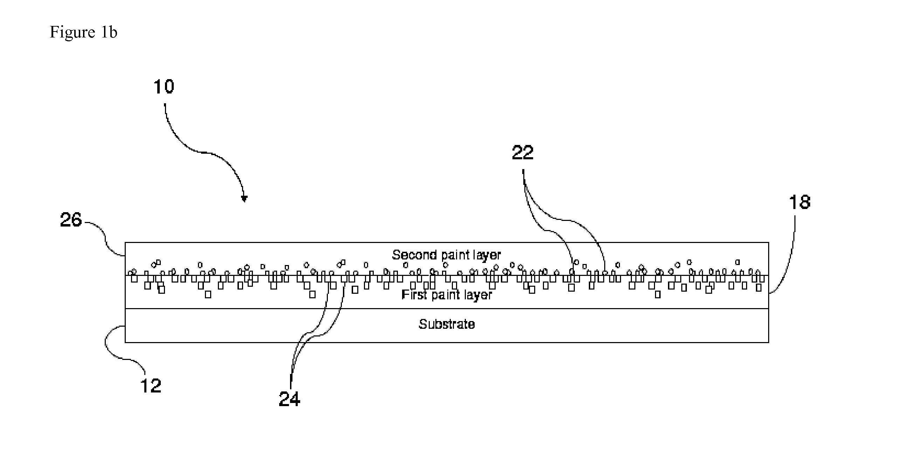

Figure 1b is a schematic cross-section view of the substrate having the first paint layer disposed thereon and the second paint layer disposed on the basecoat paint layer, wherein the first organoborane complex in the first paint layer and the first decomplexing agent in the second paint layer are located at an interface of the first and second paint layers.

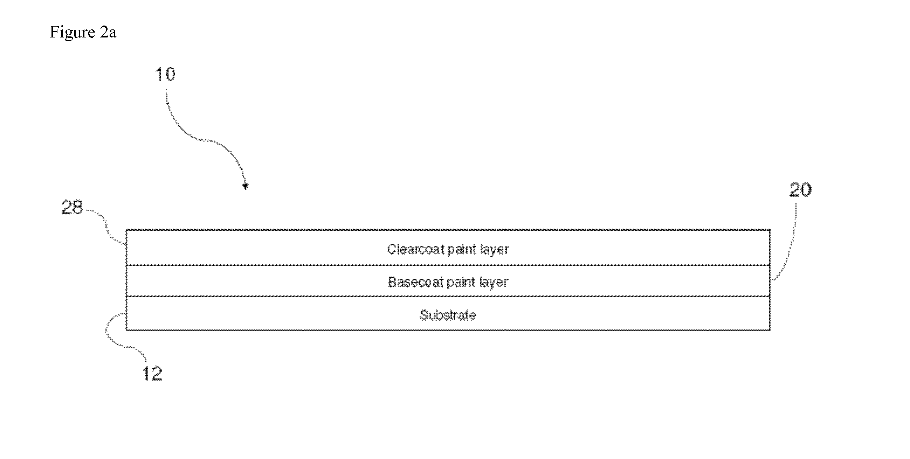

Figure 2a is a schematic cross-sectional view of the substrate having the first paint layer disposed thereon and the second paint layer disposed on the first paint layer, wherein the first paint layer is a basecoat paint layer and the second paint layer is a clearcoat paint layer;

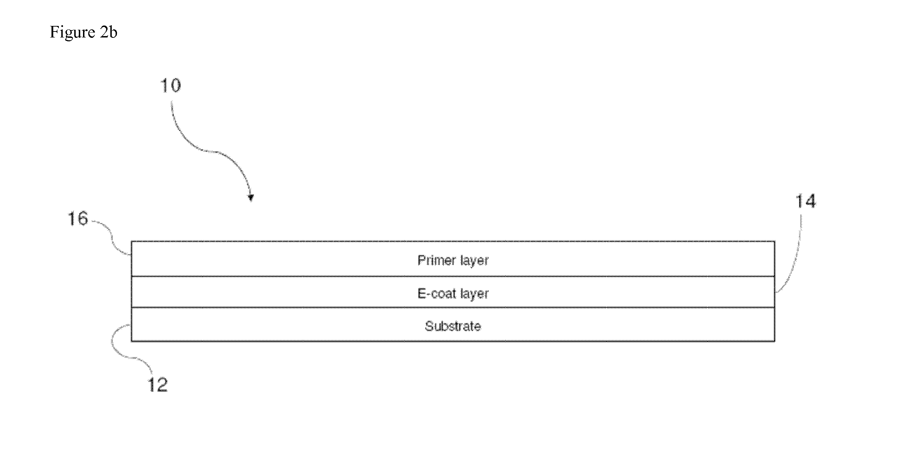

Figure 2b is a schematic cross-sectional view of the substrate having the first paint layer disposed thereon and the second paint layer disposed on the first paint layer, wherein the first paint layer is an e-coat layer and the second paint layer is a primer layer;

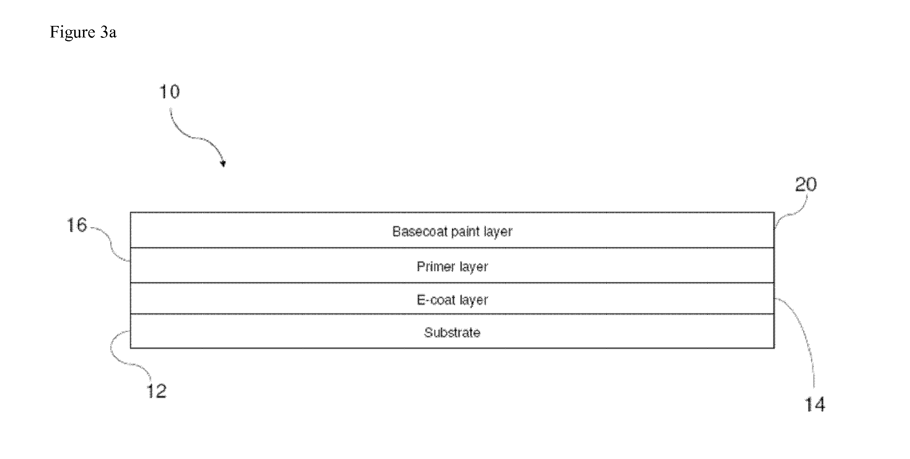

Figure 3a is a schematic cross-sectional view of the substrate having the first paint layer disposed thereon, the second paint layer disposed on the first paint layer, and a third paint layer disposed on the second paint layer, wherein the first paint layer is the e-coat layer, the second paint layer is the primer layer, and the third paint layer is the basecoat paint layer;

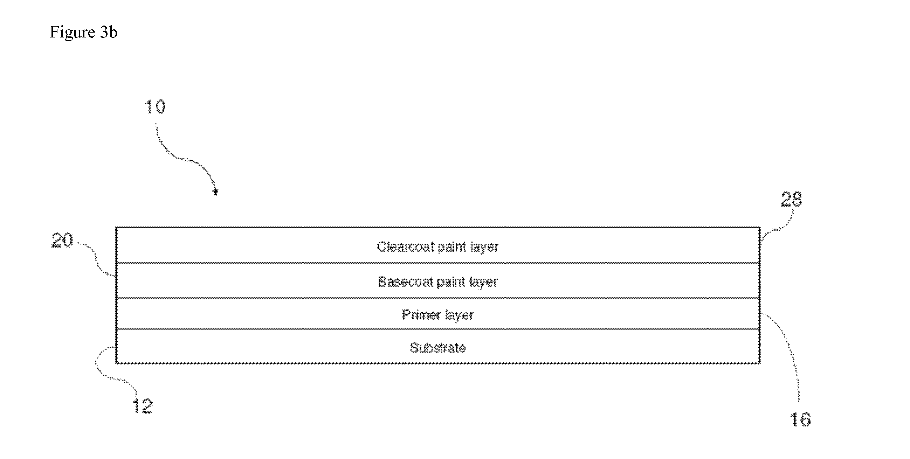

Figure 3b is a schematic cross-sectional view of the substrate having the first paint layer disposed thereon, the second paint layer disposed on the first paint layer, and the third paint layer disposed on the second paint layer, wherein the first paint layer is the primer layer, the second paint layer is the basecoat paint layer, and the third paint layer is the clearcoat paint layer; and

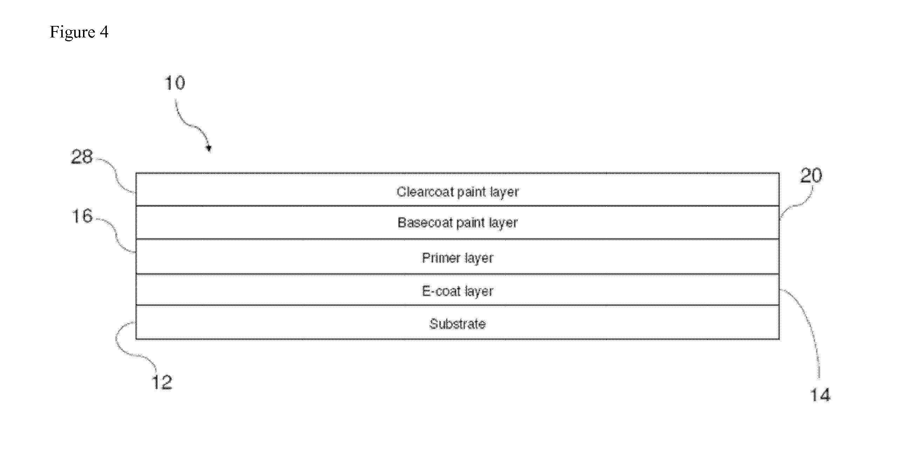

Figure 4 is a schematic cross-sectional view of the substrate having the first paint layer disposed thereon, the second paint layer disposed on the first paint layer, the third paint layer disposed on the second paint layer, and a fourth paint layer disposed on the third paint layer, wherein the first paint layer is the e-coat layer, the second paint layer is the primer layer, the third paint layer is the basecoat paint layer, and the fourth paint layer is the clearcoat paint layer.

### DETAILED DESCRIPTION OF THE INVENTION

Referring to the Figures, wherein like numerals indicate corresponding parts throughout the several views, a paint coating system is generally shown at 10. The present invention provides the paint coating system 10 and a method of producing a multilayered paint coating, each of which is described in greater detail below. The paint coating system 10 and the method of the present invention are particularly suitable for the automotive coating industry; however, it is to be appreciated that the paint coating system 10 and the method are not limited to the automotive coating industry. For example, the paint coating system 10 and the method may be utilized in the coil coating industry.

The paint coating system 10 includes a substrate 12. The substrate 12 may comprise any type of material, such as a metal, an alloy, a polymeric material, etc. In addition, the substrate 12 may have a coating disposed thereon. Typically, the substrate 12 is an automobile body. It is to be appreciated that the automobile body may be any type of automobile body; for example, the automobile body may be a car, a truck, an SUV, a trailer, a bus, etc. In addition, it is to be appreciated that the term "automobile body" encompasses automobile components, such as bumpers, mirrors, and/or body panels. As set forth above, the automobile body may have a coating disposed thereon. For example, the substrate 12 may be an automobile body having a phosphate coating, an e-coat layer 14, a primer layer 16, or any combination thereof disposed on the automobile body.

The paint coating system 10 further includes a first paint layer 18 disposed on the substrate 12. In embodiments in which the substrate 12 is the automobile body, the first paint layer 18 may be, for example, an e-coat layer 14, a primer layer 16, or a basecoat paint layer 20. The first paint layer 18 is formed from a first composition comprising either a first decomplexing agent 22 or a first organoborane complex 24 for purposes which are described in greater detail below. It is to be appreciated that although the first composition comprises either the first decomplexing agent 22 or the first organoborane complex 24, the other of the first decomplexing agent 22 and the first organoborane complex 24 may also be present in the first composition provided that it is present in an amount which is insufficient to form free radicals which may initiate free radical polymerization. For example, in embodiments in which the first composition comprises the first decomplexing agent 22, the first composition may also comprise the first organoborane complex 24 so long as the first decomplexing agent 22 is present in a molar excess relative to the first organoborane complex 24 to prevent the formation of free radicals.

The first composition may be water-borne or solvent-borne. In certain embodiments, the first composition comprises the first decomplexing agent 22. The first decomplexing agent 22 is typically selected from the group of acids, such as carboxylic acid, acetic acid, acrylic acid, methacrylic acid, polyacrylic acid, polymethacrylic acid, methacrylic anhydride, undecylenic acid, oleic acid, ascorbic acid, hydrochloric acid, and lauric acid; carboxylic acid derivatives, such as anhydrides and/or succinates; isocyanates; aldehydes; epoxides; acid chlorides; cyclic carbonates; sulphonyl chlorides; transition metal Lewis acids, carbon dioxide; and combinations thereof. In embodiments in which the first composition comprises the first decomplexing agent 22, the first decomplexing agent 22 may be used in any amount to form the first composition.

Alternatively, in certain embodiments, the first composition comprises the first organoborane complex 24. Although not required, the first organoborane complex 24 is typically selected from organoborane-amine complexes and organoborane-thiol complexes. An organoborane complex, which is also known in the art as a blocked organoborane, is a complex formed between an organoborane initiator (i.e., an organoborane (R₃B)) and a blocking agent, which is also referred to in the art as a complexing agent. The blocking agent renders the organoborane initiator stable at ambient conditions and in a variety of solutions of radical polymerizable compounds. When the first organoborane complex 24 comprises an organoborane-amine complex, the blocking agent comprises an amine. When the first organoborane complex 24 comprises an organoborane-thiol complex, the blocking agent comprises a thiol.

The organoborane initiator typically includes tri-functional boranes which have the general structure: 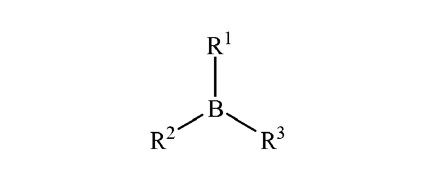 wherein each of R¹ - R³ independently has 1 to 20 carbon atoms and wherein each of R¹ - R³ independently include one of a hydrogen atom, a cycloalkyl group, a linear or branched alkyl group having from 1 to 12 carbon atoms in a backbone, an aliphatic group, and aromatic group, an alkylaryl group, an alkylene group capable of functioning as a covalent bridge to the boron, and halogen substituted homologues thereof, such that at least one of R¹, R², and R³ includes one or more carbon atoms, and is covalently bonded to boron. Up to two of R¹-R³ may also independently be an alkoxy group such as a methoxy or ethoxy group such that at least one of R¹-R³ provides a boron-carbon covalent bond. The aliphatic and/or aromatic hydrocarbon groups may be linear, branched, and/or cyclic. The organoborane initiator may be further defined as, but is not limited to, tri-methylborane, tri-ethylborane, tri-n-butylborane, tri-n-octylborane, tri-sec-butylborane, tri-dodecylborane, phenyldiethylborane, and combinations thereof. Other suitable examples include 9-BBN in a 0.5M solution as monomer 9-borabicyclo[3.3.1]nonane in hexanes, 9-BBN in a 0.5M solution as monomer 9-borabicyclo[3.3.1]nonane in tetrahydrofuran, 9-BBN in a 0.5M solution as monomer 9-borabicyclo[3.3.1]nonane in toluene, dibutylboron triflate (DBBT) in a 0.5M solution in n-heptane, dibutylboron triflate (DBBT) in a 0.5M solution in methylene chloride, dibutylboron triflate (DBBT) in a 0.5M solution in toluene, dicyclohexylboron triflate (DCBT) in a 0.5M solution in hexanes, dicyclohexylchloroborane (DCBCL) in a 1M solution in hexanes, methoxydiethylborane (MDEB) as a neat liquid, a 50 wt% solution of methoxydiethylborane (MDEB) in tetrahydrofuran, triethylborane (TEB) as a neat liquid, triethylborane (TEB) as a neat liquid in tetrahydrofuran, triethylborane (TEB) in a 1M solution in hexanes, tri-n-butylborane (TNBB) as a neat liquid, tri-sec-butylborane (TSBB) as a neat liquid. Typically, the organoborane is further defined as tri-*n-*butylborane. For descriptive purposes only, the structure of tri-*n*-butylborane is set forth below:

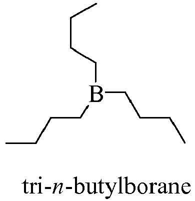

When the first organoborane complex 24 is an organoborane-amine complex, any amine known in the art may be used to form the organoborane-amine complex. Typically, the amine includes at least one of an alkyl group, an alkoxy group, an amidine group, an ureido group, and combinations thereof. Particularly suitable amines include, but are not limited to, 1,3 propane diamine, 1,6-hexanediamine, methoxypropylamine, pyridine, isophorone diamine, amine functional compounds including at least one amine functional group such as 3-aminopropyl, 6-aminohexyl, 11-aminoundecyl, 3-(N-allylamino)propyl, N-(2-aminoethyl)-3-aminopropyl, aminomethyl, N-(2-aminoethyl)-3-aminoisobutyl, p-aminophenyl, 2-ethylpyridine, and combinations thereof.

When the first organoborane complex 24 is an organoborane-thiol complex, any thiol known in the art may be used to form the organoborane-thiol complex. Typically, the thiol includes at least one of an alkyl group, an alkoxy group, an amidine group, an ureido group, and combinations thereof. Particularly suitable thiols include, but are not limited to, alkyl thiols having the general formula CₙH₂ₙ₊₁SH where n is an integer from one to twelve, mercapto-alcohols having the general formula HS(CH₂)ₙOH where n is an integer from two to twelve, and combinations thereof.

Referring back to the first organoborane complex 24 itself, the instant invention can utilize any organoborane-amine complex or organoborane-thiol complex known in the art. Each organoborane initiator of each respective organoborane complex is capable of initiating polymerization or cross-linking of radical polymerizable compounds after dissociation of the organoborane initiator from the blocking agent, i.e., the amine or thiol, as described in greater detail below. Without intending to be limited by any particular theory, it is believed that tri-substituted boranes, in the presence of triplet oxygen, can undergo bi-molecular homolytic cleavage at a boron-carbon bond to yield corresponding peroxyl, alkoxyl, ketone triplet, and/or thiyl (also known as sulfenyl) radicals. These radicals may propagate by reacting with the organoborane initiator that is dissociated from the amine or thiol until termination at a trialkyl borate. In one embodiment, the first organoborane complex 24 is destabilized at ambient temperatures through exposure to suitable decomplexing agents, (e.g. amine or thiol reactive compounds), as also described in greater detail below.

When the first organoborane complex 24 is an organoborane-amine complex, the first organoborane complex 24 typically has the formula: 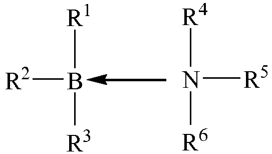 wherein B represents boron and each of R¹-R³ may be the same as described above. Similarly, each of R⁴-R⁶ may be any such that the amine is any described above and is a primary, secondary, or tertiary amine. In addition, R⁴-R⁶ may also contain additional amine and/or thiol functionality, such as when at least one of R⁴-R⁶ is a diamino propane group. In one alternative embodiment, each of R¹, R², R³, R⁴, R⁵, and R⁶ is independently selected from the group of a hydrogen atom, an alkyl group, an alkoxy group, an arylalkyl group, an alkylene group, halogenated homologs thereof, and combinations thereof. In another alternative embodiment, the first organoborane complex 24 has the formula: 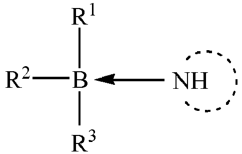 wherein each of R¹-R³ is as described above and wherein the amine is further defined as a cyclic amine.

Suitable non-limiting examples of the first organoborane complex 24, when the first organoborane complex 24 is an organoborane-amine complex, include N,N-diethyl aniline borane (DEANB) as a neat liquid, pyridine borane (PYB) as a neat liquid, a 50 wt% solution pyridine borane (PYB) in pyridine, tert-butylamine borane (TBAB) as a powder, triethylamine borane (TEAB) as a neat liquid, triethylborane-1,3-diaminopropane complex (TEB-DAP) as a neat liquid, trimethylamine borane (TMAB) as a powder, and combinations thereof. An additional suitable example of the organoborane-amine complex is triethylborane complexed with diisopropylamine.

In one embodiment, the organoborane-amine complex is selected from the group of tri-*n*-butylborane diaminopropane (T*n*BB-DAP), tri-*sec*-butylborane methoxypropylamine (T*s*BB-MOPA), tri-*n*-butylborane methoxypropylamine (T*n*BB-MOPA), triethylborane cysteamine (TEB-CA or TEB-cysteamine), tri-*n*-butylborane cysteamine (T*n*BB-CA), triethylborane diethylenetriamine (TEB-DETA), triethylborane diaminopropane (TEB-DAP), tri-*sec*-butylborane diaminopropane (T*s*BB-DAP), and combinations thereof. For descriptive purposes only, chemical structures of these organoborane-amine complexes are set forth below:

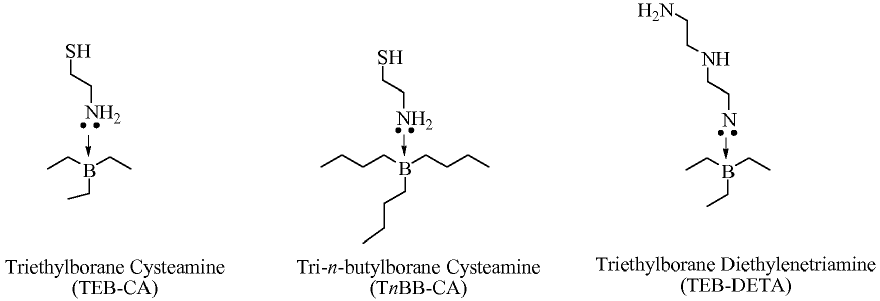

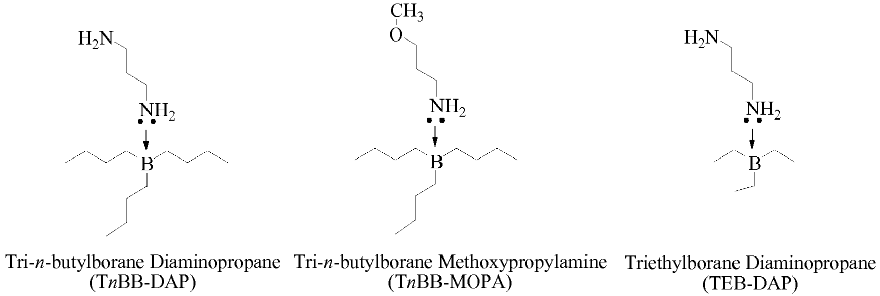

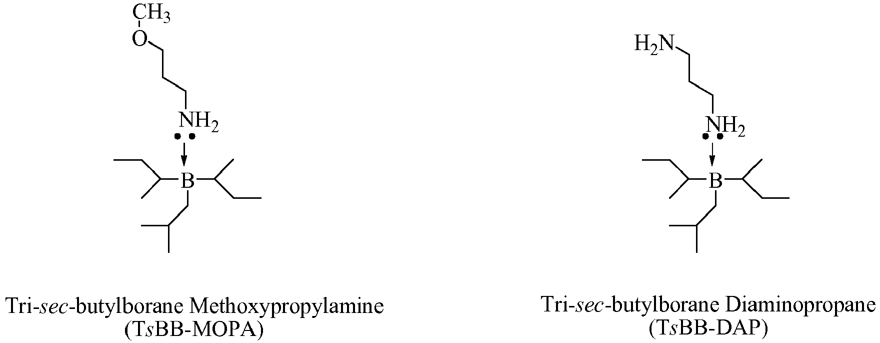

Examples of first organoborane complex 24 when the first organoborane complex is the organoborane-thiol complex include, but are not limited to, trialkylborane mercaptoethanol and trialkylborane dodecanethiol. For descriptive purposes only, chemical structures of these organoborane-thiol complexes are set forth below: 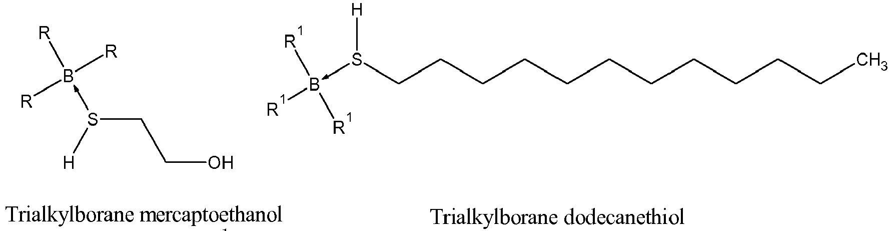 wherein each R and R¹ group is an independently selected alkyl group.

The first organoborane complex 24 may be physically and/or chemically attached (bound) to a solid particle such as a phase support to control working times, as well as to stabilize liquid phase organoborane complexes against separating during storage. Attachment can be accomplished by a number of known surface treatments either *in-situ* or *a priori.* Some surface treatment methods include pre-treating solid particles such as ground or precipitated silica, calcium carbonate, carbon black, carbon nanoparticles, barium sulfate, titanium dioxide, aluminum oxide, boron nitride, silver, gold, platinum, palladium, and alloys thereof, base metals such as nickel, aluminum, copper, and steel, and combinations thereof, with a reactive compound. The pretreatment may be followed by complexation with the first organoborane complex 24, or by direct treatment of the solid particles. If the solid particles include functional groups, additives such as substrate treating agents or impurities that are inherently amine-reactive or thiol-reactive may require appropriate precautions to avoid premature decomplexation of the first organoborane complex 24 being attached. Solid particles including amine-reactive or thiol-reactive substances can be purified or neutralized before attachment of the first organoborane complex 24. Alternatively, the attachment of the first organoborane complex 24 may be performed in an oxygen free environment.

In various embodiments, the first organoborane complex 24 is used to form free radicals in the presence of oxygen which polymerize radical polymerizable compounds to form dimers, oligomers, pre-polymers, polymers, co-polymers, block polymers, star polymers, graft polymers, random co-polymers, and/or combinations thereof that may or may not remain able to be further radically polymerized, as described in greater detail below.

When the first composition comprises the first organoborane complex 24, the first organoborane complex 24 may be used in any amount to form the first composition. Typically, the first organoborane complex 24 is used in an amount of from 0.01 to 95, more typically of from 0.1 to 80, even more typically of from 0.1 to 30, still more typically of from 1 to 20, even more typically of from 1 to 15, and most typically of from 2 to 5 parts by weight per 100 parts by weight of the first composition. The amounts of the first organoborane complex 24 depend upon a molecular weight and functionality of the first organoborane complex 24 and the presence of other components in the first composition, such as fillers.

The paint coating system 10 further includes a second paint layer 26 disposed on the first paint layer 18. The second paint layer 26 is formed from a second composition. When the substrate 12 is the automobile body, the second paint layer 26 may be, for example, the primer layer 16, the basecoat paint layer 20, or a clearcoat paint layer 28. For example, when the first paint layer 18 is the e-coat layer 14, the second paint layer 26 is typically the primer layer 16. When the first paint layer 18 is the primer layer 16, the second paint layer 26 is typically the basecoat paint layer 20. Thus, it is to be appreciated that the second paint layer 26 may be, but is not required to be, the outermost paint layer in the paint coating system 10. Further, when the first paint layer 18 is the basecoat paint layer 20, the second paint layer 26 is typically the clearcoat paint layer 28. In certain embodiments, as shown in Figure 2b, the first paint layer 18 is the e-coat layer 14 and the second paint layer 26 is the primer layer 16. In other embodiments, as shown in Figure 2a, the first paint layer 18 is the basecoat paint layer 20 and the second paint layer 26 is the clearcoat paint layer 28. Notably, when the first paint layer 18 is the basecoat paint layer 20 and the second paint layer 26 is the clearcoat paint layer 28, the first composition is typically referred to as a basecoat composition and the second composition is typically referred to as a clearcoat composition. Alternatively, it is to be appreciated that the first paint layer 18 and the second paint layer 26 together form the primer layer 16, the basecoat paint layer 20, the clearcoat paint layer 28, etc. For example, the primer layer 16 may be applied in more than one passes, and a first pass may be the first paint layer 18 and the second pass may be the second paint layer 26, which together form the primer layer 16.

The second composition may be a solvent-borne composition or a water-borne composition. The second composition comprises the other of the first decomplexing agent 22 and the first organoborane complex 24. It is to be appreciated that although the second composition comprises the first decomplexing agent 22 or the first organoborane complex 24, depending on which is present in the first composition, the other of the first decomplexing agent 22 and the first organoborane complex 24 may also be present in the second composition provided that it is present in an amount which is insufficient to form free radicals which may initiate free radical polymerization. For example, in embodiments in which the second composition comprises the first organoborane complex 24, the second composition may also comprise the first decomplexing agent 22 so long as the first organoborane complex 24 is present in an excess relative to the first decomplexing agent 22 to prevent the formation of free radicals. Typically, the first decomplexing agent 22 or the first organoborane complex 24 is present in the second composition in a 1:1 molar ratio with the other of the first decomplexing agent 22 or the first organoborane complex 24 present in the first composition. The first organoborane complex 24 is reactive with the first decomplexing agent 22. In particular, the first decomplexing agent 22 decomplexes the first organoborane complex 24 at an interface of the first and second paint layers, as described in greater detail below with respect to the method of the present invention.

In certain embodiments, the second composition comprises the first organoborane complex 24, which is described above. This embodiment is shown in Figure 1b, which illustrates the first paint layer 18, e.g. the basecoat paint layer 20, including the first decomplexing agent 22 and the second paint layer 26, e.g. the clearcoat paint layer 28, including the first organoborane complex 24. It is to be appreciated that Figure 1b is a schematic view and in no way represents representative sizes, configurations, concentrations, or disbursement of the first decomplexing agent 22 and the first organoborane complex 24. An alternative embodiment, in which the second composition comprises the first decomplexing agent 22, is shown in Figure 1a, which illustrates the first paint layer 18, e.g. the basecoat paint layer 20, including the first organoborane complex 24 and the second paint layer 26, e.g. the clearcoat paint layer 28, including the first decomplexing agent 22. It is to be appreciated that Figures 1a and 1b are schematic views and in no way represents representative sizes, configurations, concentrations, or disbursement of the first decomplexing agent 22 and the first organoborane complex 24. Notably, in Figures 2a, 2b, 3a, 3b, and 4, the schematic representation of the first decomplexing agent 22 and the first organoborane complex 24 are intentionally removed for purposes of clarity. The amounts of the first organoborane complex 24 or the first decomplexing agent 22 present in the second composition are typically within the ranges provided above with respect to the first composition.

Typically, when the first organoborane complex 24 comprises an organoborane-amine complex, the first decomplexing agent 22 of the first composition is selected from the group of acids, such as carboxylic acid, acetic acid, acrylic acid, methacrylic acid, polyacrylic acid, polymethacrylic acid, methacrylic anhydride, undecylenic acid, oleic acid, ascorbic acid, hydrochloric acid, and lauric acid; carboxylic acid derivatives, such as anhydrides and/or succinates; isocyanates; aldehydes; epoxides; acid chlorides; cyclic carbonates; sulphonyl chlorides; carbon dioxide, and combinations thereof Alternatively, when the first organoborane complex 24 comprises an organoborane-thiol complex, the first decomplexing agent 22 of the first composition comprises a transition metal Lewis acid.

At least one of the first composition and the second composition further comprises a radical polymerizable compound. In certain embodiments, the first composition comprises the radical polymerizable compound. In these embodiments, the second composition is typically a two-component composition. Two-component compositions are known throughout the art and generally comprise two different types of compounds which have functional groups that are reactive with one another. The two-component composition may be cured via physical or chemical techniques. For example, one type of two-component composition is a polyurethane composition, which comprises an isocyanate, typically an unblocked isocyanate, and a polyol. The isocyanate and the polyol are separately packaged and are typically mixed during application to form a paint layer, such as by impingement mixing. Alternatively, the second composition may comprise the radical polymerizable compound. In these embodiments, the first composition is generally a two-component composition. It is also to be appreciated that each of the first and second compositions may comprise a radical polymerizable compound, which may be the same or different in each respective composition.

The radical polymerizable compound typically includes one or more ethylenically unsaturated groups per molecule. It is contemplated that the radical polymerizable compound may include two ethylenically unsaturated groups or three or more ethylenically unsaturated groups. As is well known in the art, ethylenically unsaturated groups are electrophilic and donate electrons during polymerization. The radical polymerizable compound may also include one or more alkynyl groups. The radical polymerizable compound may be selected from the group of monomers, dimers, oligomers, pre-polymers, polymers, co-polymers, block polymers, star polymers, graft polymers, random co-polymers, and combinations thereof, so long as the radical polymerizable compound is still capable of radical polymerization. In one embodiment, the radical polymerizable compound is a monomer. In another embodiment, the radical polymerizable compound is partially polymerized and is a polymer, but still retains an ability to be further polymerized. In a further embodiment, the radical polymerizable compound is selected from the group of mono- and poly- unsaturated glycerols or phospholipids, phosphor diesters, peptides, nucleosides, nucleotides, and combinations thereof, having at least one radically polymerizable functional group.

In still a further embodiment, the radical polymerizable compound is selected from the group of acrylates, carbamates, epoxides, and combinations thereof Suitable non-limiting examples of carbamates and epoxides are those having at least one radically polymerizable functional group and typically one or more functional groups selected from the group of esters, ethers, ketones, aldehydes, carboxylic acids, amides and ureas, acrylics, sulfur groups, phosphorous groups, and combinations thereof. The carbamates may include aliphatic, cycloaliphatic, and aromatic groups and may have linear or branched structures with various functionalities including, but not limited to, branched hydrocarbon functionality, hydroxyl functionality, carboxylate functionality, carbamate functionality, and/or ester functionality. In a further embodiment, the radical polymerizable compound is selected from the group of α,β-unsaturated aliphatic compounds, vinyl esters, substituted styrenes, esters of methacrylic acid, esters of acrylic acid, and combinations thereof. Examples of suitable α,β-unsaturated aliphatic compounds include, but are not limited to, 1-octene, 1-hexene, 1-decene, and combinations thereof. Non-limiting examples of suitable vinyl esters and styrenes include vinyl acetate, styrene, α-methylstyrene, *p*-methylstyrene, and combinations thereof.

In other embodiments, the radical polymerizable compound is selected from the group of acrylates, halogen substituted acrylates, alkenoates, carbonates, phthalates, acetates, itaconates, and combinations thereof. Suitable examples of acrylates include, but are not limited to, butyl acrylate, t-butyl acrylate, isobornyl acrylate, isodecyl acrylate, 2-ethylhexyl acrylate, lauryl acrylate, cyclohexyl acrylate, octyl acrylate, isocyanate containing acrylates such as isocyanatoacrylate, and combinations thereof. In additional embodiments, the radical polymerizable compound is selected from the group of diacrylates, triacrylates, polyacrylates, urethane acrylates, unsaturated polyesters, and combinations thereof. Suitable examples of di-, tri-, and poly- acrylates include, but are not limited to, hexanediol diacrylate, tripropyleneglycol diacrylate, trimethylolpropane triacrylate, alkoxylated trimethylolpropane triacrylate, pentaerythritol triacrylate, pentaerythritol tetraacrylate, dipentaerythritol hexaacrylate, and combinations thereof. Suitable non-limiting examples of urethane acrylates include Ebercryl 8402 and Ebercryl 8301 commercially available from UCB Chemicals and Actilane 251, commercially available from Akcros Chemicals. Suitable non-limiting examples of unsaturated polyesters include polyesters prepared with maleic anhydride. In an additional embodiment, the radical polymerizable compound is further defined a mixture of an OH-acrylic resin and a dipentaerythritol penta/hexa acrylate. In yet another embodiment, the radical polymerizable compound is selected from the group of unsaturated acrylic ester resins, functional acrylic ester monomers, and combinations thereof.

In still other embodiments, the radical polymerizable compound is selected from the group of butyleneglycol diacrylate, butylene glycol dimethylacrylate, 2-ethylhexylacrylate, 2-ethylhexylmethacrylate, 2-hydroxyethylacrylate, 2 hydroxyethyl methacrylate, methylacrylate, methylmethacrylate, neopentylglycol diacrylate, neopentylglycoldimethacrylate, glycidyl acrylate, glycidyl methacrylate, allyl acrylate, allyl methacrylate, stearyl acrylate, stearyl methacrylate, tetrahydrofurfuryl acrylate, tetrahydrofurfuryl methacrylate, caprolactone acrylate, perfluorobutyl acrylate, perfluorobutyl methacrylate, 1H, 1H, 2H, 2H-heptadecafluorodecyl acrylate, 1H, 1H, 2H, 2H-heptadecafluorodecyl methacrylate, tetrahydroperfluoroacrylate, phenoxyethyl acrylate, phenoxyethyl methacrylate, bisphenol A acrylate, bisphenol A dimethacrylate, ethoxylated bisphenol A acrylate, ethoxylated bisphenol A methacrylate, hexafluoro bisphenol A diacrylate, hexafluoro bisphenol A dimethacrylate, diethyleneglycol diacrylate, diethyleneglycol dimethacrylate, dipropyleneglycol diacrylate, dipropyleneglycol dimethacrylate, polyethyleneglycol diacrylate, polyethyleneglycol dimethacrylate, polypropyleneglycol diacrylate, polypropyleneglycol dimethacrylate, trimethylolpropanetriacrylate, trimethylolpropanetrimethacrylate, ethoxylated trimethylolpropanetriacrylate, ethoxylated trimethylolpropanetrimethacrylate, pentaerythritol triacrylate, pentaerythritol trimethacrylate, pentaerythritol tetraacrylate, pentaerythritol tetramethacrylate, and combinations thereof. Other examples of suitable acrylates include acrylamides and methacrylamides such as N-isopropyl acrylamide and N,N-dimethylacrylamide. In one embodiment, the radical polymerizable compound is selected from the group of alkylene glycol dialkylacrylate, alkylene glycol diacrylate, and combinations thereof.

Suitable examples of alkenoates include, but are not limited to, alkyl-N-alkenoates, methyl-3-butenoate, and combinations thereof. Suitable examples of carbonates include, but are not limited to, alkyl carbonates, allyl alkyl carbonates such as allyl methyl carbonate, diallyl pyrocarbonate, diallyl carbonate, and combinations thereof. Suitable itaconates for use in the present invention include, but are not limited to, alkyl itaconates such as dimethyl itaconate. Non-limiting examples of suitable acetates include alkyl acetates, allyl acetates, allyl acetoacetates, and combinations thereof. Non-limiting of examples of phthalates include, but are not limited to, allyl phthalates, diallyl phthalates, and combinations thereof.

The radical polymerizable compound may also include styrene and substituted styrenes, particularly when used in conjunction with acrylic monomers. The radical polymerizable compound may alternatively include acrylate tipped polyurethane prepolymers prepared by reacting isocyanate reactive acrylate monomers, oligomers or polymers, such as hydroxy acrylates, with isocyanate functional prepolymers. Also useful are a class of conductive monomers, dopants, oligomers, polymers, and macromonomers having an average of at least one free radical polymerizable group per molecule, and the ability to transport electrons, ions, holes, and/or phonons. Non-limiting examples include, but are not limited to, 4,4'4"-tris[N-(3(2-acryloyloxyethyloxy)phenyl)-N-phenylamino]triphenylamine, and 4,4'4"-tris[N-(3(benzoyloxyphenyl)-N-phenylamino]triphenylamine.

It is also contemplated that the radical polymerizable compound may include compounds including acryloxyalkyl groups such as an acryloxypropyl group, methacryloxyalkyl groups such as a methacryloxypropyl group, and/or unsaturated organic groups including, but not limited to, alkenyl groups having 2-12 carbon atoms including vinyl, allyl, butenyl, and hexenyl groups, alkynyl groups having 2-12 carbon atoms including ethynyl, propynyl, and butynyl groups, and combinations thereof. The unsaturated organic groups may include radical polymerizable groups in oligomeric and/or polymeric polyethers including an allyloxypoly(oxyalkylene) group, halogen substituted analogs thereof, and combinations thereof. In another embodiment, the radical polymerizable compound includes a compound formed by copolymerizing organic compounds having polymeric backbones with the radical polymerizable compound such that there is an average of at least one free radical polymerizable group per copolymer. Suitable organic compounds include, but are not limited to, hydrocarbon based polymers such as polyisobutylene, polybutadienes, polyisoprenes, polyolefins such as polyethylene, polypropylene and polyethylene polypropylene copolymers, polystyrenes, styrene butadiene, and acrylonitrile butadiene styrene, polyacrylates, polyethers such as polyethylene oxide and polypropyleneoxide, polyesters such as polyethylene terephthalate and polybutylene terephthalate, polyamides, polycarbonates, polyimides, polyureas, polymethacrylates, partially fluorinated or perfluorinated polymers such as polytetrafluoroethylene, fluorinated rubbers, terminally unsaturated hydrocarbons, olefins, polyolefins, and combinations thereof. Of course, it is to be understood that the radical polymerizable compound is not limited to the aforementioned compounds and may include any others known in the art. In addition, the radical polymerizable compound may be used in conjunction with any other type of chemistries, includes those which require oven cures.

It is to be appreciated that either the first or second compositions may further comprise a second, a third, or more than three radical polymerizable compounds. The second, third, and any additional radical polymerizable compounds may be the same or different from the radical polymerizable compound described above. It is to be appreciated that the free radical polymerizable compound may be used in conjunction with any other type of chemistries, includes those which require oven cures. In various embodiments, the radical polymerizable compound is typically present in the first and/or second composition in an amount of from 20 to 99, more typically in an amount of from 50 to 99, still more typically in an amount of from 60 to 99 parts by weight per 100 parts by weight of the first and/or second composition, respectively.

In certain embodiments, the paint coating system 10 of the present invention further includes a third paint layer disposed on the second paint layer 26. The third paint layer is typically the basecoat paint layer 20 or the clearcoat paint layer 28. For example, as shown in Figure 3a, when the first paint layer 18 is the e-coat layer 14 and the second paint layer 26 is the primer layer 16, the third paint layer is the basecoat paint layer 20. Alternatively, as shown in Figure 3b, when the first paint layer 18 is the primer layer 16 and the second paint layer 26 is the basecoat paint layer 20, the third paint layer is the clearcoat paint layer 28.

The third paint layer is formed from a third composition. The third composition may be a solvent-borne composition or a water-borne composition. When the first composition comprises the first organoborane complex 24 and the second composition comprises the first decomplexing agent 22, the third composition typically comprises a third layer organoborane complex which may be the same as or different from the first organoborane complex 24. Typically, in this embodiment, the first organoborane complex 24 and the third layer organoborane complex are independently selected from the group of organoborane-amine complexes. The third layer organoborane complex may be any of the organoborane-amine complexes set forth above with respect to the first organoborane complex 24.

When the first organoborane complex 24 and the third layer organoborane complex are independently selected from the group of organoborane-amine complexes, the first decomplexing agent 22 of the second composition is typically selected from the group of acids, such as carboxylic acid, acetic acid, acrylic acid, methacrylic acid, polyacrylic acid, polymethacrylic acid, methacrylic anhydride, undecylenic acid, oleic acid, ascorbic acid, hydrochloric acid, and lauric acid; carboxylic acid derivatives, such as anhydrides and/or succinates; isocyanates; aldehydes; epoxides; acid chlorides; cyclic carbonates; sulphonyl chlorides; carbon dioxide, and combinations thereof. The first decomplexing agent 22 decomplexes both the first organoborane complex 24 and the third layer organoborane complex at an interface between the first and second paint layers 18, 26 and the second and third paint layers, respectively. It is to be appreciated that when the first decomplexing agent 22 is the transition metal Lewis acid, the first organoborane complex 24 and the third layer organoborane complex may be independently selected from the group of organoborane-thiol complexes set forth above. In these embodiments, the first decomplexing agent 22 of the second composition also decomplexes the first organoborane complex 24 and the third layer organoborane complex at interfaces between the first and second paint layers 18, 26 and the second and third paint layers, respectively.

In is to be appreciated that when the first composition comprises the first organoborane complex 24, the second composition comprises the first decomplexing agent 22, and the third composition comprises the third layer organoborane complex, the first paint layer 18 is typically the primer layer 16, the second paint layer 26 is typically the basecoat paint layer 20, and the third paint layer is typically the clearcoat paint layer 28, as illustrated in Figure 3b. Thus, the primer layer 16 comprises the first organoborane complex 24, the basecoat paint layer 20 comprises the first decomplexing agent 22, and the clearcoat paint layer 28 comprises the third layer organoborane complex. Typically in these embodiments, the substrate 12 has an e-coat layer 14 disposed thereon. In addition, in these embodiments, the first and third compositions comprise the radical polymerizable compound, whereas the second composition is the two-component composition.

Alternatively, when the first composition comprises the first decomplexing agent 22 and the second composition comprises the first organoborane complex 24, the second composition further comprises a second decomplexing agent different from the first decomplexing agent 22 and substantially nonreactive with the first organoborane complex 24. The second decomplexing agent is substantially nonreactive with the first organoborane complex 24 at ambient conditions to prevent the second decomplexing agent from decomplexing the first organoborane complex 24 in the second composition. For example, when the first decomplexing agent 22 is selected from the group of acids, such as carboxylic acid, acetic acid, acrylic acid, methacrylic acid, polyacrylic acid, polymethacrylic acid, methacrylic anhydride, undecylenic acid, oleic acid, ascorbic acid, hydrochloric acid, and lauric acid; carboxylic acid derivatives, such as anhydrides and/or succinates; isocyanates; aldehydes; epoxides; acid chlorides; cyclic carbonates; sulphonyl chlorides; carbon dioxide; and combinations thereof; the second decomplexing agent is the transition metal Lewis acid, i.e., the second decomplexing agent is different form the first decomplexing agent 22. In addition, when the first organoborane complex 24 is an organoborane-amine complex, the second decomplexing agent is the transition metal Lewis acid due to the fact that transition metal Lewis acids generally do not decomplex organoborane-amine complexes at ambient conditions. Alternatively, when the first organoborane complex 24 is an organoborane-thiol complex, the second decomplexing agent is selected from the group of acids, such as carboxylic acid, acetic acid, acrylic acid, methacrylic acid, polyacrylic acid, polymethacrylic acid, methacrylic anhydride, undecylenic acid, oleic acid, ascorbic acid, hydrochloric acid, and lauric acid; carboxylic acid derivatives, such as anhydrides and/or succinates; isocyanates; aldehydes; epoxides; acid chlorides; cyclic carbonates; sulphonyl chlorides; carbon dioxide; and combinations thereof; due to the fact that these decomplexing agents generally do not decomplex organoborane-thiol complexes at ambient conditions.

Further, when the first composition comprises the first decomplexing agent 22 and the second composition comprises the first organoborane complex 24, the third composition further comprises the third layer organoborane complex. In this embodiment, the third layer organoborane complex is typically different from the first organoborane complex 24 for reasons described in greater detail below with respect to the method of the present invention. For example, when the first organoborane complex 24 is an organoborane-amine complex, the third layer organoborane complex may be an organoborane-thiol complex. Alternatively, when the first organoborane complex 24 is an organoborane-thiol complex, the third layer organoborane complex may be an organoborane amine complex. Suitable examples of the third layer organoborane complex, whether the third layer organoborane complex is an organoborane-amine complex or an organoborane-thiol complex, are described above. The second decomplexing agent decomplexes the third layer organoborane complex at an interface of the second and third paint layers to form free radicals which initiate free radical polymerization of at least one of the second and third paint layers, as described in greater detail below. Any amounts of organoborane complexes and/or decomplexing agents present in the third composition are generally within the ranges provided above with respect to the first composition.

The third composition typically comprises a radical polymerizable compound selected from the group of free radical polymerizable monomers, free radical polymerizable oligomers, free radical polymerizable polymers, and combinations thereof. The radical polymerizable compound of the third composition may be the same as or different from the radical polymerizable compound of the first composition and/or the second composition. Typically, the radical polymerizable compound of the third composition is independently selected from those which are set forth above with respect to the radical polymerizable compound of the first and/or composition. It is to be appreciated that the free radical polymerizable compound may be used in conjunction with any other type of chemistries, includes those which require oven cures.

When the first composition comprises the first decomplexing agent 22 and the second composition comprises the first organoborane complex 24, the paint coating system 10 of the present invention may further include a fourth paint layer disposed on the third paint layer. When present, the fourth paint layer is typically the clearcoat paint layer 28. For example, as shown in Figure 4, when the first paint layer 18 is the e-coat layer 14, the second paint layer 26 is the primer layer 16, and the third paint layer is the basecoat paint layer 20, the fourth paint layer is the clearcoat paint layer 28.

When the paint coating system 10 further includes the fourth paint layer, the third composition further comprises a third decomplexing agent different from the second decomplexing agent and substantially nonreactive with the third layer organoborane complex. The third decomplexing agent is substantially nonreactive with the third layer organoborane complex at ambient conditions to prevent the third decomplexing agent from decomplexing the third layer organoborane complex in the third composition. For example, when the second decomplexing agent is selected from the group of acids, such as carboxylic acid, acetic acid, acrylic acid, methacrylic acid, polyacrylic acid, polymethacrylic acid, methacrylic anhydride, undecylenic acid, oleic acid, ascorbic acid, hydrochloric acid, and lauric acid; carboxylic acid derivatives, such as anhydrides and/or succinates; isocyanates; aldehydes; epoxides; acid chlorides; cyclic carbonates; sulphonyl chlorides; carbon dioxide; and combinations thereof; the third decomplexing agent is the transition metal Lewis acid, i.e., the third decomplexing agent is different form the second decomplexing agent. In addition, when the third layer organoborane complex is the organoborane-amine complex, the third decomplexing agent is the transition metal Lewis acid due to the fact that transition metal Lewis acids generally do not decomplex organoborane-amine complexes at ambient conditions. Alternatively, when the third layer organoborane complex is the organoborane-thiol complex, the third decomplexing agent is selected from the group of acids, such as carboxylic acid, acetic acid, acrylic acid, methacrylic acid, polyacrylic acid, polymethacrylic acid, methacrylic anhydride, undecylenic acid, oleic acid, ascorbic acid, hydrochloric acid, and lauric acid; carboxylic acid derivatives, such as anhydrides and/or succinates; isocyanates; aldehydes; epoxides; acid chlorides; cyclic carbonates; sulphonyl chlorides; carbon dioxide; and combinations thereof; due to the fact that these decomplexing agents generally do not decomplex organoborane-thiol complexes at ambient conditions. Notably, the third decomplexing agent may be the same as or different from the first decomplexing agent 22. Typically, the third decomplexing agent and the first decomplexing agent 22 are each independently selected from the same group of decomplexing agents, i.e., each is independently selected from transition metal Lewis acids or each is independently selected from the group of acids, such as carboxylic acid, acetic acid, acrylic acid, methacrylic acid, polyacrylic acid, polymethacrylic acid, methacrylic anhydride, undecylenic acid, oleic acid, ascorbic acid, hydrochloric acid, and lauric acid; carboxylic acid derivatives, such as anhydrides and/or succinates; isocyanates; aldehydes; epoxides; acid chlorides; cyclic carbonates; sulphonyl chlorides; carbon dioxide; and combinations thereof.

The fourth paint layer is formed from a fourth composition. The fourth composition may be a solvent-borne composition or a water-borne composition. The fourth composition comprises a fourth layer organoborane complex different from the third layer organoborane complex for reasons described in greater detail below with respect to the method of the present invention. For example, when the third layer organoborane complex is an organoborane-amine complex, the fourth layer organoborane complex is an organoborane-thiol complex. Alternatively, when the third layer organoborane complex is an organoborane-thiol complex, the fourth layer organoborane complex is an organoborane-amine complex. Suitable examples of the fourth layer organoborane complex, whether the fourth layer organoborane complex is an organoborane-amine complex or an organoborane-thiol complex, are described above. The third decomplexing agent decomplexes the fourth layer organoborane complex at an interface of the third and fourth paint layers, as described in greater detail below. Any amounts of organoborane complexes and/or decomplexing agents present in the fourth composition are generally within the ranges provided above with respect to the first composition.

The fourth composition may further comprise a radical polymerizable compound selected from the group of free radical polymerizable monomers, free radical polymerizable oligomers, free radical polymerizable polymers, and combinations thereof. The radical polymerizable compound of the fourth composition may be the same as or different from the radical polymerizable compound of the first, second, and/or third compositions. Although not required, the radical polymerizable compound of the fourth composition is typically independently selected from those which are set forth above with respect to the radical polymerizable compound of the first composition. It is to be appreciated that the free radical polymerizable compound may be used in conjunction with any other type of chemistries, includes those which require oven cures.

It is to be appreciated that, in addition to the aforementioned compounds, the first, second, third, and/or fourth compositions may also include one or more additives. The one or more additives may be selected from the group consisting of leveling agents, solvents, surfactants, fillers, stabilizers, solvents, plasticizers, defoaming agents, wetting additives, catalysts, rheology controlling agents, pigments, photosynergists, adhesion promoters, pigment dispersants, flow aids, acid functional polymers, additive polymers, catalysts, and combinations thereof. Non-limiting examples of suitable surfactants include Surfynol® Surfactants commercially available from Air Products and Chemicals, Inc. of Allentown, PA. Suitable non-limiting examples of plasticizers include Coroc® Acrylic Plasticizer Resins commercially available from Cook Composites and Polymers of St. Louis, MO.

The one or more additives may also include a catalyst to enhance curing. Such catalysts, which are well-known in the art, include, but are not limited to, phenyl acid phosphate, monobutyl maleate, butyl phosphate, hydroxy phosphate ester, and combinations thereof. Other catalysts that may be useful in the composition include, but are not limited to, transition metal salts such as zinc salts and tin salts, and combinations thereof. The catalyst may be blocked, unblocked, or partially blocked. The catalyst may be blocked or partially blocked with an amine or other suitable blocking agent such as an oxirane modifying material. If included, the catalyst is preferably included in an amount of 0.1 to 1.2, more preferably of 0.1 to 0.9, and most preferably of 0.2 to 0.7, parts by weight per 100 parts by weight of the composition.

If any of the first, second, third, and/or fourth compositions include a solvent, the solvent may be any known in the art, including water, and may be HAPs free. In one embodiment, the solvent includes a polar organic solvent. In another embodiment, the solvent includes a polar aliphatic solvent. In an additional embodiment, the solvent includes a polar aromatic solvent. In yet another embodiment, the solvent is selected from the group of a ketone, an ester, an acetate, an aprotic amide, an aprotic sulfoxide, an aprotic amine, and combinations thereof. If included, the solvent is typically included in an amount of up to 60, more typically in an amount of from 5 to 50, and most typically in an amount of from 10 to 40, parts by weight per 100 parts by weight of the respective composition.

As set forth above, the one or more additives may include pigment. When, for example, one of the first, second, third, or fourth compositions is used to form the basecoat paint layer 20, the pigment may include organic and/or inorganic compounds, colored materials, fillers, metallic and/or inorganic flake materials, such as aluminum or mica flake, and combinations thereof. Non-limiting examples of suitable pigments include a carbon black pigment, titanium dioxide and other inorganic colored pigments, such as iron oxide, chrome yellow, moly orange, titanium yellow, nickel titanate yellow, chrome greens, and the like.

As set forth above, the present invention also provides a method for producing the multilayered paint coating. The method comprises the step of providing the substrate 12. The method further comprises the step of applying the first paint layer 18 on the substrate 12. The method also comprises the step of applying the second paint layer 26 on the first paint layer 18. In addition, the method comprises the step of curing at least one of the first paint layer 18 and the second paint layer 26, thereby producing the multilayered paint coating. It is to be appreciated that in embodiments in which the paint coating system 10 comprises the third paint layer, the method of the present invention further comprises the step of applying the third paint layer on the second paint layer 26. Similarly, when the paint coating system 10 comprises the fourth paint layer, the method further comprises the step of applying the fourth paint layer on the third paint layer.

The step of applying each of the first, second, third, and/or fourth paint layers may include any application processes known in the art. For example, the step of applying each of the paint layers may comprise applying each respective composition to form each of the paint layers. Suitable application processes include, but are not limited to, spray coating, dip coating, roll coating, curtain coating, electrostatic spraying, and combinations thereof. It is to be appreciated that each of the paint layers may be applied in a "wet-on-wet" manner, i.e., each respective composition may be applied consecutively prior to curing each of the respective paint layers. In addition, any of the paint layers may be "pre-cured" by, for example, flashing off solvent, provided that additional polymerization may occur after the pre-curing. In addition, it is to be appreciated that each respective paint layer may be applied in multiple passes, i.e., each respective paint layer is not required to be applied in a single pass when applying each respective paint layer to achieve a desired film build, or thickness, which is generally dependent upon the type of paint layer is being applied, among other things.

Alternatively, each of the first, second, third, and/or fourth paint layers may be preformed films. For example, the first composition may be formed into a preformed film, which may be disposed on the substrate 12 to form the first paint layer 18. Each preformed film may be formed by at least partially polymerizing the first, second, third, and/or fourth compositions. In this embodiment, the step of applying the first paint layer 18 on the substrate 12 comprises disposing the preformed film formed from the first composition on the substrate 12. In addition, the step of applying the second paint layer 26 on the first paint layer 18 comprises disposing the preformed film formed from the second composition on the first paint layer 18. When dealing with preformed films, the step of applying the third paint layer, if present, comprises disposing a preformed film formed from the third composition on the second paint layer 26. Additionally, the step of applying the fourth paint layer, if present, comprises disposing a preformed film formed from the fourth composition on the third paint layer.

It is to be appreciated that any combination of methods for applying the first, second, third, and/or fourth paint layers may be utilized. For example, the first paint layer 18 may be applied on the substrate 12 by disposing the preformed film formed from the first composition on the substrate 12. The second paint layer 26 may be applied on the first paint layer 18 by spray coating the second composition on the first paint layer 18 to form the second paint layer 26. Stated differently, each respective paint layer may be applied in an independent method which may be the same as or different from the method of applying any other paint layer.

As set forth above, the method of the present invention includes the step of curing at least one of the first paint layer 18 and the second paint layer 26. The step of curing the at least one of the first paint layer 18 and the second paint layer 26 is typically performed at ambient temperature, i.e., at a temperature of from 20 °C to 30 °C, and ambient pressure, i.e., about 1 atm. Stated differently, the step of curing the at least one of the first paint layer 18 and the second paint layer 26 is typically performed in the absence of external heat. Because the step of curing the at least one of the first paint layer 18 and the second paint layer 26 is typically performed in the absence of heat, the method of the present invention does not require ovens which are traditionally utilized to cure paint layers. However, it is to be appreciated that heat, UV radiation, and other methods of curing the first, second, third, and/or fourth paint layers may be utilized.

It is to be appreciated that the language "curing at least one of the first and second paint layers" is in reference the paint layer formed from the composition comprising the radical polymerizable compound. For example, when the first composition comprises the radical polymerizable compound, the step of curing is in reference to the first paint layer 18, and when the second composition comprises the radical polymerizable compound, the step of curing is in reference to the second paint layer 26. In addition, when the first composition comprises the radical polymerizable compound and the second composition is the two-component composition, the method of the present invention generally further comprises the step of curing the second paint layer 26. When the second composition is the two-component composition, the second paint layer 26 may be cured by any methods known in the art, such as by heat, UV radiation, etc. Similarly, when the second composition comprises the radical polymerizable compound and the first composition is the two-component composition, the method of the present invention generally further comprises the step of curing the first paint layer 18. When the first composition is the two-component composition, the first paint layer 18 may be cured by any methods known in the art, such as by heat, UV radiation, etc.

When the method includes in the step of applying the third paint layer on the second paint layer 26, the method typically also includes the step of curing the third paint layer. In addition, when the method includes in the step of applying the fourth paint layer on the third paint layer, the method typically also includes the step of curing the fourth paint layer. Is it to be appreciated that when the method includes the steps of applying and curing the third and fourth paint layers, the time for curing all of the paint layers will be greater than the time set forth above. In addition, it is to be appreciated that each of the third and fourth compositions utilized to form the third and fourth paint layers may comprise the radical polymerizable compound and my cure via free radical polymerization. Alternatively, each of the third and fourth compositions utilized to form the third and fourth paint layers may be cured via other techniques described above, and may be two-component compositions. In addition, one of the third and fourth compositions may be a two-component composition while the other comprises the radical polymerizable compound. When the method includes the steps of curing the third and/or fourth paint layers, multiple paint layers may be cured simultaneously, i.e., the step of curing may comprise a single step of curing for multiple paint layers.

The step of curing the at least one of the first paint layer 18 and the second paint layer 26 typically comprises polymerizing the radical polymerizable compound via free radical polymerization. The mechanism of free radical polymerization is known in the art and typically includes three stages: initiation, propagation, and termination. Typically, a homolytic substitution reaction occurs between triplet oxygen and the organoborane initiator thereby forming the radical which reacts with oxygen and forms an alkyl radical. The alkyl radical typically propagates a developing polymer chain through additional homolytic reactions of the radical polymerizable compound and any second, third, or additional radical polymerizable compounds. The termination stage may include coupling wherein two radical species react with each other forming a single molecule. Alternatively, chain disproportionation may occur wherein two radicals meet and exchange protons.

Without intending to be limited by theory, it is believed that when the second paint layer 26 is applied on the first paint layer 18, the first decomplexing agent 22 and/or the first organoborane complex 24 migrate within the respective layer to an interface between the first and second paint layers. The first decomplexing agent 22 decomplexes the first organoborane complex 24, thereby forming free radicals which initiate free radical polymerization of the radical polymerizable compound of the second paint layer 26 and/or the first paint layer 18. In addition, because curing of the first and/or second paint layers is initiated at the interface between the first and second paint layers, the first and second paint layers, when cured, have excellent physical properties. Without intending to be limited by theory, it is believed that because the first and/or second paint layers cure from the "inside out," i.e., at the interface of the first and second paint layers, the first and second paint layers have excellent adhesion and appearance.

Similarly, in embodiments in which the first composition comprises the first organoborane complex 24, the second composition comprises the first decomplexing agent 22, and the third composition comprises the third layer organoborane complex, the first organoborane complex 24, the first decomplexing agent 22, and/or the third layer organoborane complex migrate within each respective paint layer such that the first decomplexing agent 22 decomplexes the first organoborane complex at an interface of the first and second paint layers and also decomplexes the third layer organoborane complex at an interface of the second and third paint layers. When the first decomplexing agent 22 decomplexes each respective organoborane complex, free radicals are formed which initiate free radical polymerization of the radical polymerizable compound of the first, second, and/or third paint layers. Typically, in this embodiment, the first and third compositions comprise the radical polymerizable compound, and the second composition is the two-component composition. Thus, each of the first and third paint compositions cures via free radical polymerization, while the second paint layer 26 is cured via an alternative technique, such as by heat, UV radiation, etc. Stated differently, in this embodiment, the primer layer 16 and the clearcoat paint layer 28 typically cure via free radical polymerization as described herein, and the basecoat paint layer 20 is cured in other ways not relying on free radical polymerization, including other chemical (e.g. two-component compositions) and/or physical (e.g. UV radiation, heat, etc.) techniques.

Alternatively, in embodiments in which the first composition comprises the first decomplexing agent 22 and the second composition comprises the first organoborane complex, and when then method of the present invention includes applying the third paint layer on the second paint layer 26, the second decomplexing agent in the second paint layer 26 and/or the third layer organoborane complex in the third paint layer migrate within the respective layer to an interface between the second and third paint layers. The second decomplexing agent of the second paint layer 26 then decomplexes the third layer organoborane complex of the third paint layer, thereby forming free radicals which initiate free radical polymerization of the radical polymerizable compound of the second and/or third paint layers. Notably, in these embodiments, the second composition comprises both the second decomplexing agent and the first organoborane complex 24. The second composition remains stable at ambient conditions due to the fact the second decomplexing agent and the first organoborane complex 24 are substantially non-reactive with one another. The same is true for the third composition, which includes both the third decomplexing agent and the fourth layer organoborane complex when the method further comprises the step of applying the fourth paint layer on the third paint layer. "Substantially nonreactive," as used herein in reference to the second decomplexing agent and the first organoborane complex 24 and/or the third decomplexing agent and the fourth layer organoborane complex, is defined as stable such that free radical polymerization of the radical polymerizable compound is inhibited while in the presence of the second decomplexing agent and the first organoborane complex 24 or the third decomplexing agent and the fourth layer organoborane complex.

When then method of the present invention further comprises applying the fourth paint layer on the third paint layer, the third decomplexing agent in the third paint layer and/or the fourth layer organoborane complex in the fourth paint layer migrate within the respective layer to an interface between the third and fourth paint layers. The third decomplexing agent of the third paint layer then decomplexes the fourth layer organoborane complex of the fourth paint layer, thereby forming free radicals which initiate free radical polymerization of the radical polymerizable compound of the third and/or fourth paint layers.

When each of the first, second, third, and/or fourth paint layers are the preformed film, heat may be utilized to increase surface interaction between each respective layer and to allow for migration of each decomplexing agent and/or organoborane complex. Alternatively, other forms of energy may be utilized, such as UV radiation. Notably, when the first, second, third, and/or fourth paint layers are applied "wet-on-wet," curing may be performed in the absence of heat, as described above.

In addition, in embodiments where the first composition comprises the first decomplexing agent 22 and the second composition comprises the first organoborane complex 25, and when the method includes the step of applying the third and/or fourth paint layers, the step of curing the paint layers is referred to as "cascade curing." In cascade curing, the first decomplexing agent 22 migrates within the first paint layer 18 to decomplex the first organoborane complex 24 of the second paint layer 26 at the interface between the first and second paint layers, thereby forming free radicals and initiating free radical polymerization of the radical polymerizable compound of the first and/or second paint layers. In addition, the second decomplexing agent migrates within the second paint layer 26 to decomplex the third layer organoborane complex of the third paint layer at the interface between the second and third paint layers, thereby forming free radicals and initiating free radical polymerization of the radical polymerizable compound of the second and/or third paint layer. Finally, the third decomplexing agent migrates within the third paint layer to decomplex the fourth layer organoborane complex of the fourth paint layer at the interface between the third and fourth paint layers, thereby forming free radicals and initiating free radical polymerization of the radical polymerizable compound of the third and/or fourth paint layer. Typically, the paint layers which comprise an organoborane complex are those which are cured via free radical polymerization. Thus, the paint layers which comprise an organoborane complex also typically comprise the radical polymerizable compound. Therefore, in this embodiment, the second, third, and fourth paint layers cure via free radical polymerization as described herein, and the first paint layer 18 is cured in other ways not relying on free radical polymerization, including other chemical (e.g. two-component compositions) and/or physical (e.g. UV radiation, heat, etc.) techniques. Stated differently, in this embodiment, the primer layer 16, the basecoat paint layer 20, and the clearcoat paint layer 28 typically cure via free radical polymerization, and the e-coat layer 14 is cured in other ways not relying on free radical polymerization.

## Claims

1. A paint coating system comprising:
a substrate;
a first paint layer disposed on said substrate and formed from a first composition comprising either a first decomplexing agent or a first organoborane complex; and
a second paint layer disposed on said first paint layer and formed from a second composition comprising the other of said first decomplexing agent and said first organoborane complex;
wherein at least one of said first composition and said second composition further comprises a radical polymerizable compound selected from the group of free radical polymerizable monomers, free radical polymerizable oligomers, free radical polymerizable polymers, and combinations thereof; and
wherein said first decomplexing agent decomplexes said first organoborane complex at an interface of said first and second paint layers to form free radicals which initiate free radical polymerization of said polymerizable compound.

2. A paint coating system as set forth in claim 1 wherein said first composition comprises said first organoborane complex and said second composition comprises said first decomplexing agent.

3. A paint coating system as set forth in claim 1 wherein said first composition comprises said first decomplexing agent and said second composition comprises said first organoborane complex.

4. A paint coating system as set forth in claim 3 further comprising a third paint layer disposed on said second paint layer and formed from a third composition comprising a third layer organoborane complex, wherein said second composition further comprises a second decomplexing agent different from said first decomplexing agent and substantially nonreactive with said first organoborane complex, and wherein said second decomplexing agent decomplexes said third layer organoborane complex at an interface of said second and third paint layers to form free radicals which initiate free radical polymerization of at least one of said second and third paint layers.

5. A paint coating system as set forth in claim 4 wherein said second decomplexing agent is further defined as a transition metal Lewis acid and said third layer organoborane complex is further defined as an organoborane-thiol complex.

6. A paint coating system as set forth in any of claims 1 to 3 further comprising a third paint layer disposed on said second paint layer and formed from a third composition comprising a third layer organoborane complex.

7. A paint coating system as set forth in any of claims 4 to 6 wherein said first paint layer is further defined as a primer paint layer, said second paint layer is further defined as a basecoat paint layer, and said third paint layer is further defined as a clearcoat paint layer.

8. A paint coating system as set forth in any of claims 4 to 6 further comprising a fourth paint layer disposed on said third paint layer and formed from a fourth composition comprising a fourth layer organoborane complex, wherein said third composition further comprises a third decomplexing agent different from said second decomplexing agent and substantially nonreactive with said third layer organoborane complex, and wherein said third decomplexing agent decomplexes said fourth layer organoborane complex at an interface of said third and fourth paint layers to form free radicals which initiate free radical polymerization of at least one of said third and fourth paint layers..

9. A paint coating system as set forth in any of claims 4 to 6 further comprising a fourth paint layer disposed on said third paint layer and formed from a fourth composition comprising a fourth layer organoborane complex.

10. A paint coating systems as set forth in any of claims 8 or 9 wherein said first paint layer is further defined as an e-coat paint layer, said second paint layer is further defined as a primer paint layer, said third paint layer is further defined as a basecoat paint layer, and said fourth paint layer is further defined as a clearcoat paint layer.

11. A paint coating system as set forth in any preceding claim wherein said substrate is further defined as an automobile body.

12. A paint coating system as set forth in any preceding claim wherein said first organoborane complex is further defined as an organoborane-amine complex.

13. A paint coating system as set forth in any preceding claim wherein said first decomplexing agent is selected from the group of acids, acid derivatives, isocyanates, aldehydes, epoxides, acid chlorides, cyclic carbonates, sulphonyl chlorides, carbon dioxide, and combinations thereof.

14. A method for producing a multilayered paint coating from the paint coating system of any preceding claim comprising the step of curing at least one of the first and second paint layers, thereby producing the multilayered paint coating.

15. A method as set forth in claim 14 wherein the step of curing at least one of the first and second paint layers is further defined as polymerizing the radical polymerizable compound at a temperature of from 20 °C to 30 °C.

## Patentansprüche

1. Lackbeschichtungssystem, umfassend:
ein Substrat;
eine auf dem Substrat angeordnete und aus einer ersten Zusammensetzung, die entweder ein erstes Dekomplexierungsmittel oder einen ersten Organo-borankomplex umfasst, gebildete erste Lackschicht; und
eine auf der ersten Lackschicht angeordnete und aus einer zweiten Zusammensetzung, die je nachdem, welche der Substanzen in der ersten Zusammensetzung nicht vorhanden ist, das erste Dekomplexierungsmittel bzw. den ersten Organo-borankomplex umfasst, gebildete zweite Lackschicht;
wobei die erste Zusammensetzung und/oder die zweite Zusammensetzung ferner eine radikalisch polymerisierbare Verbindung aus der Gruppe bestehend aus radikalisch polymerisierbaren Monomeren, radikalisch polymerisierbaren Oligomeren, radikalisch polymerisierbaren Polymeren und Kombinationen davon umfassen bzw. umfasst; und
wobei das erste Dekomplexierungsmittel den ersten Organoborankomplex an einer Grenzfläche der ersten Lackschicht und der zweiten Lackschicht unter Bildung von Radikalen, die die radikalische Polymerisation der polymerisierbaren Verbindung initiieren, dekomplexiert.

2. Lackbeschichtungssystem nach Anspruch 1, wobei die erste Zusammensetzung den ersten Organoborankomplex umfasst und die zweite Zusammensetzung das erste Dekomplexierungsmittel umfasst.

3. Lackbeschichtungssystem nach Anspruch 1, wobei die erste Zusammensetzung das erste Dekomplexierungsmittel umfasst und die zweite Zusammensetzung den ersten Organoborankomplex umfasst.

4. Lackbeschichtungssystem nach Anspruch 3, ferner umfassend eine auf der zweiten Lackschicht angeordnete und aus einer dritten Zusammensetzung, die einen Drittschicht-Organoborankomplex umfasst, gebildete dritte Lackschicht, wobei die zweite Zusammensetzung ferner ein Dekomplexierungsmittel, das von dem ersten Dekomplexierungsmittel verschieden und gegenüber dem ersten Organoborankomplex weitgehend unreaktiv ist, umfasst und wobei das zweite Dekomplexierungsmittel den Drittschicht-Organoborankomplex an einer Grenzfläche der zweiten Lackschicht und der dritten Lackschicht unter Bildung von Radikalen, die die radikalische Polymerisation der zweiten Lackschicht und/oder der dritten Lackschicht initiieren, dekomplexiert.

5. Lackbeschichtungssystem nach Anspruch 4, wobei das zweite Dekomplexierungsmittel ferner als Übergangsmetall-Lewis-Säure definiert ist und der Drittschicht-Organoborankomplex ferner als ein Organoboran-Thiol-Komplex definiert ist.

6. Lackbeschichtungssystem nach einem der Ansprüche 1 bis 3, ferner umfassend eine auf der zweiten Lackschicht angeordnete und aus einer dritten Zusammensetzung, die einen Drittschicht-Organoborankomplex umfasst, gebildete dritte Lackschicht.

7. Lackbeschichtungssystem nach einem der Ansprüche 4 bis 6, wobei die erste Lackschicht ferner als eine Grundierungslackschicht definiert ist, die zweite Lackschicht ferner als eine Basislackschicht definiert ist und die dritte Lackschicht ferner als eine Klarlackschicht definiert ist.

8. Lackbeschichtungssystem nach einem der Ansprüche 4 bis 6, ferner umfassend eine auf der dritten Lackschicht angeordnete und aus einer vierten Zusammensetzung, die einen Viertschicht-Organoborankomplex umfasst, gebildete vierte Lackschicht, wobei die dritte Zusammensetzung ferner ein drittes Dekomplexierungsmittel, das von dem zweiten Dekomplexierungsmittel verschieden und gegenüber dem Drittschicht-Organoborankomplex weitgehend unreaktiv ist, umfasst und wobei das dritte Dekomplexierungsmittel den Viertschicht-Organoborankomplex an einer Grenzfläche der dritten Lackschicht und der vierten Lackschicht unter Bildung von Radikalen, die die radikalische Polymerisation der dritten Lackschicht und/oder der vierten Lackschicht initiieren, dekomplexiert.

9. Lackbeschichtungssystem nach einem der Ansprüche 4 bis 6, ferner umfassend eine auf der dritten Lackschicht angeordnete und aus einer vierten Zusammensetzung, die einen Viertschicht-Organoborankomplex umfasst, gebildete vierte Lackschicht.

10. Lackbeschichtungssystem nach Anspruch 8 oder 9, wobei die erste Lackschicht ferner als eine E-Lackschicht definiert ist, die zweite Lackschicht ferner als eine Grundierungslackschicht definiert ist, die dritte Lackschicht ferner als eine Basislackschicht definiert ist und die vierte Lackschicht ferner als eine Klarlackschicht definiert ist.

11. Lackbeschichtungssystem nach einem der vorhergehenden Ansprüche, wobei das Substrat ferner als eine Automobilkarosserie definiert ist.

12. Lackbeschichtungssystem nach einem der vorhergehenden Ansprüche, wobei der erste Organoborankomplex ferner als ein Organoboran-Amin-Komplex definiert ist.

13. Lackbeschichtungssystem nach einem der vorhergehenden Ansprüche, wobei das erste Dekomplexierungsmittel aus der Gruppe von Säuren, Säurederivaten, Isocyanaten, Aldehyden, Epoxiden, Säurechloriden, cyclischen Carbonaten, Sulfonylchloriden, Kohlendioxid und Kombinationen davon ausgewählt ist.

14. Verfahren zur Herstellung einer mehrschichtigen Lackbeschichtung aus dem Lackbeschichtungssystem nach einem der vorhergehenden Ansprüche, bei dem man die erste Lackschicht und/oder die zweite Lackschicht härtet, wodurch man die mehrschichtige Lackbeschichtung erhält.

15. Verfahren nach Anspruch 14, bei dem der Schritt des Härtens der ersten Lackschicht und/oder der zweiten Lackschicht ferner als Polymerisieren der radikalisch polymerisierbaren Verbindung bei einer Temperatur von 20°C bis 30°C definiert ist.

## Revendications

1. Système de revêtement de peinture comprenant :
un substrat ;
une première couche de peinture disposée sur ledit substrat et formée à partir d'une première composition comprenant un premier agent décomplexant ou un premier complexe d'organoborane ; et
une deuxième couche de peinture disposée sur ladite première couche de peinture et formée à partir d'une deuxième composition comprenant l'autre dudit premier agent décomplexant et dudit premier complexe d'organoborane ;
dans lequel ladite première composition et/ou ladite deuxième composition comprennent en outre un composé polymérisable par voie radicalaire choisi dans le groupe des monomères polymérisables par radicaux libres, des oligomères polymérisables par radicaux libres, des polymères polymérisables par radicaux libres, et des combinaisons de ceux-ci ; et
dans lequel ledit premier agent décomplexant décomplexe ledit premier complexe d'organoborane à une interface desdites première et deuxième couches de peinture pour former des radicaux libres qui initient la polymérisation par radicaux libres dudit composé polymérisable.

2. Système de revêtement de peinture selon la revendication 1 dans lequel ladite première composition comprend ledit premier complexe d'organoborane et ladite deuxième composition comprend ledit premier agent décomplexant.

3. Système de revêtement de peinture selon la revendication 1 dans lequel ladite première composition comprend ledit premier agent décomplexant et ladite deuxième composition comprend ledit premier complexe d'organoborane.

4. Système de revêtement de peinture selon la revendication 3 comprenant en outre une troisième couche de peinture disposée sur ladite deuxième couche de peinture et formée à partir d'une troisième composition comprenant un complexe d'organoborane de troisième couche, dans lequel ladite deuxième composition comprend en outre un deuxième agent décomplexant différent dudit premier agent décomplexant et sensiblement non réactif avec ledit premier complexe d'organoborane, et dans lequel ledit deuxième agent décomplexant décomplexe ledit complexe d'organoborane de troisième couche à une interface desdites deuxième et troisième couches de peinture pour former des radicaux libres qui initient la polymérisation par radicaux libres d'au moins une desdites deuxième et troisième couches de peinture.

5. Système de revêtement de peinture selon la revendication 4 dans lequel ledit deuxième agent décomplexant est en outre défini comme un acide de Lewis d'un métal de transition et ledit complexe d'organoborane de troisième couche est en outre défini comme un complexe organoborane-thiol.

6. Système de revêtement de peinture selon l'une quelconque des revendications 1 à 3 comprenant en outre une troisième couche de peinture disposée sur ladite deuxième couche de peinture et formée à partir d'une troisième composition comprenant un complexe d'organoborane de troisième couche.

7. Système de revêtement de peinture selon l'une quelconque des revendications 4 à 6 dans lequel ladite première couche de peinture est en outre définie comme une couche de peinture d'apprêt, ladite deuxième couche de peinture est en outre définie comme une couche de peinture de fond, et ladite troisième couche de peinture est en outre définie comme une couche de vernis transparent.

8. Système de revêtement de peinture selon l'une quelconque des revendications 4 à 6 comprenant en outre une quatrième couche de peinture disposée sur ladite troisième couche de peinture et formée à partir d'une quatrième composition comprenant un complexe d'organoborane de quatrième couche, dans lequel ladite troisième composition comprend en outre un troisième agent décomplexant différent dudit deuxième agent décomplexant et sensiblement non réactif avec ledit complexe d'organoborane de troisième couche, et dans lequel ledit troisième agent décomplexant décomplexe ledit complexe d'organoborane de quatrième couche à une interface desdites troisième et quatrième couches de peinture pour former des radicaux libres qui initient la polymérisation par radicaux libres d'au moins une desdites troisième et quatrième couches de peinture.

9. Système de revêtement de peinture selon l'une quelconque des revendications 4 à 6 comprenant en outre une quatrième couche de peinture disposée sur ladite troisième couche de peinture et formée à partir d'une quatrième composition comprenant un complexe d'organoborane de quatrième couche.

10. Systèmes de revêtement de peinture selon l'une quelconque des revendications 8 ou 9 dans lesquels ladite première couche de peinture est en outre définie comme une couche de peinture électrophorétique, ladite deuxième couche de peinture est en outre définie comme une couche de peinture d'apprêt, ladite troisième couche de peinture est en outre définie comme une couche de peinture de fond, et ladite quatrième couche de peinture est en outre définie comme une couche de vernis transparent.

11. Système de revêtement de peinture selon une quelconque revendication précédente dans lequel ledit substrat est en outre défini comme une carrosserie d'automobile.

12. Système de revêtement de peinture selon une quelconque revendication précédente dans lequel ledit premier complexe d'organoborane est en outre défini comme un complexe organoborane-amine.

13. Système de revêtement de peinture selon une quelconque revendication précédente dans lequel ledit premier agent décomplexant est choisi dans le groupe des acides, des dérivés d'acide, des isocyanates, des aldéhydes, des époxydes, des chlorures d'acide, des carbonates cycliques, des chlorures de sulfonyle, du dioxyde de carbone, et des combinaisons de ceux-ci.

14. Procédé de production d'un revêtement de peinture multicouche à partir du système de revêtement de peinture d'une quelconque revendication précédente comprenant l'étape de durcissement d'au moins une des première et deuxième couches de peinture, produisant ainsi le revêtement de peinture multicouche.

15. Procédé selon la revendication 14 dans lequel l'étape de durcissement d'au moins une des première et deuxième couches de peinture est en outre définie comme la polymérisation du composé polymérisable par voie radicalaire à une température de 20 °C à 30 °C.
